# EUROPEAN PATENT APPLICATION

(11) **EP 3 349 162 A1**
(43) Date of publication of application: **18.07.2018**
(21) Application number: 17000471.7
(22) Date of filing: 21.03.2017
(51) Int. Cl.: G06Q 20/40, G07F 7/08, G06F 13/38

(54) **HYBRID MOBILE PAYMENT ARCHITECTURE AND MOBILE POS MODULE THEREOF**

(30) Priority: 13.01.2017 TW 106101227
(71) Applicant: Flytech Technology Co., Ltd., Taipei City 114 (TW)
(72) Inventor: LIN, Chiung-Chi, Taipei City 114 (TW)
(74) Representative: Zeitler Volpert Kandlbinder Patent- und Rechtsanwälte Partnerschaft mbB

(57) **Abstract**

A hybrid mobile payment architecture (2) includes a wired network (20), a wireless network (27) and a mobile point-of-sale module (30). The wired network (20) is in communication with a point-of-sale system (23) and a payment system (24). The wireless network (27) is in communication with the wired network (20). The mobile point-of-sale module (30) includes a credit card reader (31), a mobile electronic device (33) and an adapter (32). The credit card reader (31) transmits a wired network signal (S1). The mobile electronic device (33) includes a wireless transmission unit (332). The wireless transmission unit (332) is in communication with the wireless network (20) to transmit a wireless network signal (S3). The adapter (32) is electrically connected between the credit card reader (31) and the mobile electronic device (33). When a domain-switching function is executed to perform conversion between the wired network signal (S1) and the wireless network signal (S3), the payment system (24) performs an authentication and verification process.

## Description

### FIELD OF THE INVENTION

The present invention relates to a hybrid mobile payment architecture and a mobile point-of-sale module, and more particularly to an architecture and a module capable of providing mobile payment service by converting wired network signals into wireless network signals.

### BACKGROUND OF THE INVENTION

The use of credit cards for consumption has become an indispensable demand for modern economic activities. The use of credit cards can reduce the risk of losing money when people carry a lot of money to consume. In addition, credit cards can record their personal consumption behaviors and receive many benefits offered by the card issuers (e.g., banks). With increasing advancement of science and technology, the credit card reading technology is gradually developed. In the early stage, the credit card has a magnetic stripe design, and the credit card is read in a swiping manner. Recently, the credit card is read by a chip insertion technology or a contactless sensing technology such as a radio frequency identification (RFID) technology or a near field communication (NFC) technology.

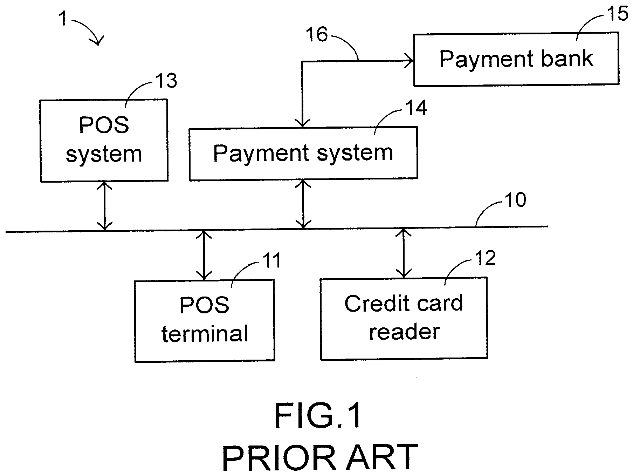

FIG. 1 schematically illustrates the conventional credit card service architecture. For example, the credit card service architecture 1 is applied to the general point-of-sale (POS) system store. As shown in FIG. 1, the credit card service architecture 1 comprises a point-of-sale terminal 11 and a credit card reader 12. The POS terminal 11 is a cash register that is placed on a checkout counter. The credit card reader 12 is used as a terminal card reader of the overall credit card payment system. Moreover, the POS terminal 11 and the credit card reader 12 of the credit card service architecture 1 are in communication with a payment system 14 through a local area network (LAN) 10. Moreover, the POS terminal 11 is in communication with a back-end POS system 13 through the local area network 10 in order to manage the selling situations.

Moreover, the POS terminal 11 and the credit card reader 12 are connected with each other through a transmission line and simultaneously connected to the local area network 10. For example, the POS terminal 11 employs a magnetic stripe reader (MSR), a chip reader or a sensing reader. The POS system 13 and the payment system 14 provide backstage services. Moreover, POS system 13 provides access application of the sales management to the store. The payment system 14 is further connected with a payment bank 15 through the internet 16 in order to provide the processing flow of the credit card authorization and verification. In Taiwan, "National credit card center of R.O.C." is a major credit clearing house. The payment bank 15 is the issuing bank of the credit card used by the consumer.

The credit card service architecture 1 of FIG. 1 is a basic and common design. However, due to the limitations of hardware installation, this architecture has drawback and inconvenience in applications. For example, the credit card reader 12 has to be connected with the network through a network cable. Moreover, the payment system 14 verifies the credit card reader 12 according to the internet protocol (IP) address value of the credit card reader 12. In other words, the IP address value is fixed, and the hardware installation is not flexible. In case that a selling unit of a store has no credit card machine or the credit card machine is far away from the selling unit, some problems occur. For example, when a consumer buys a commodity in the selling unit of the store, the service staff has to take the consumer's credit card to the counter at another place. After the credit card payment is completed, the service staff asks the consumer to sign up the credit card bill. Under this circumstance, the security and the efficiency are not satisfactory.

For solving the above drawbacks, a mobile point of sale service (mPOS) has been disclosed by National credit card center and related companies. The mPOS service can satisfy the mobile payment demand or the so-called swipe-as-you-go demand for the store and the consumer. The mPOS service allows the store to use a general mobile electronic device (e.g., a smart phone or a tablet computer) to connect with an external credit card reader to accept the consumer's credit card payment at any location in the designated wireless communication area. In detail, the mobile electronic device has the function of the terminal credit card machine of the appointed store as long as a corresponding application program (APP) is installed in the mobile electronic device connected with the specified credit card reader and the electronic signature is used. Consequently, the drawbacks of using the fixed credit card machine in the conventional technology are solved.

Moreover, in order to ensure transaction security, the credit card reader for the mPOS technology (including the magnetic stripe reader, the chip reader or the sensing reader) must pass the security standard certification of the EMV organization (including Europay International, MasterCard and Visa). The wireless communication area is a specified area allowing for 3G, 4G or Wi-Fi wireless communication.

Generally, the 3G, 4G or Wi-Fi wireless communication is performed according to the dynamic IP address values. However, in the credit card service architecture 1 of FIG. 1, the payment system 14 verifies the credit card reader 12 through a dedicated phone line and the fixed IP address value. Consequently, the mPOS technology cannot be applied to the existing wireless network credit card service architecture. For example, it is impossible to directly install a wireless base station (or routers or access points) in the credit card service architecture 1 of FIG. 1 to use the wireless network credit card service. In other words, it is necessary to make other specified wireless network settings before using the wireless network credit card service.

Although the mPOS technology provides security and convenience to the store and the consumer in the credit card transaction, the mPOS technology cannot be combined with the existing wireless network credit card service architecture. Consequently, it is necessary to set up the additional credit card service architecture while making the authentication settings for the back-end payment system. Moreover, setting up two different architectures is not cost-effective, and the systematic management for different architectures is not convenient. Therefore, there is a need of provided an improved approach to overcome the above drawbacks.

### SUMMARY OF THE INVENTION

For solving the drawbacks of the conventional technologies, the present invention provides a hybrid mobile payment architecture and a mobile point-of-sale module. In the architecture and the module, the existing mobile electronic device and the existing credit card reader are combined together. Moreover, a domain-switching function is provided for converting a wired network signal into a wireless network signal. Consequently, the mobile payment function can be achieved on the basis of the existing wireless network credit card service architecture.

In accordance with an aspect of the present invention, there is provided a hybrid mobile payment architecture. The hybrid mobile payment architecture includes a wired network, a wireless network and a mobile point-of-sale module. The wired network is in communication with a point-of-sale system and a payment system. The wireless network is in communication with the wired network. The mobile point-of-sale module includes a credit card reader, a mobile electronic device and an adapter. The credit card reader transmits a wired network signal corresponding to a payment information. The mobile electronic device includes a wireless transmission unit. The wireless transmission unit is in communication with the wireless network to transmit a wireless network signal. The adapter is electrically connected between the credit card reader and the mobile electronic device. When the mobile point-of-sale module executes a domain-switching function of performing conversion between the wired network signal and the wireless network signal, the payment system performs an authentication and verification process on the payment information.

In an embodiment, the mobile point-of-sale module further includes an assembling case, and the credit card reader, the mobile electronic device and the adapter are assembled in the assembling case.

In an embodiment, when the domain-switching function is performed, the adapter performs conversion between the wired network signal and a data packet and the mobile electronic device performs conversion between the data packet and the wireless network signal. The data packet is transmitted between the adapter and the mobile electronic device. The wired network signal is transmitted between the adapter and the credit card reader.

In an embodiment, a conversion circuit of the adapter performs conversion between the wired network signal and the data packet. Moreover, a domain-switching application program installed in the mobile electronic device is executed to perform conversion between the data packet and the wireless network signal.

In an embodiment, the credit card reader has a function of a magnetic stripe reader, a chip reader or a sensing reader.

In an embodiment, the wired network is a local area network, and the wireless network is provided by a wireless base station. The wireless base station is connected with the local area network in a wired transmission manner.

In an embodiment, the mobile point-of-sale module and the wireless base station are connected with each other according to the same internet protocol address value, and the internet protocol address value corresponds to the wired network signal and the wireless network signal.

In an embodiment, the hybrid mobile payment architecture further includes a point-of-sale terminal and an additional credit card reader. The point-of-sale terminal is in communication with the point-of-sale system through the wired network signal. The additional credit card reader is in communication with the payment system through the wired network signal. The additional credit card reader is connected to the payment system according to another internet protocol address value.

In an embodiment, the adapter and the credit card reader are electrically connected with each other through a first transmission line, and the first transmission line is an Ethernet cable line or an Ethernet network line with RJ-45 plugs.

In an embodiment, the adapter and the mobile electronic device are electrically connected with each other through a second transmission line, and the second transmission line is a USB transmission line.

In an embodiment, a mobile payment application program corresponding to the credit card reader is installed in the mobile electronic device. When the mobile payment application program is executed, a mobile payment service is operated.

In accordance with another aspect of the present invention, there is provided a mobile point-of-sale module for a wired network and a wireless network. The wired network is in in communication with a point-of-sale system and a payment system. The wireless network is in communication with the wired network. The mobile point-of-sale module includes a credit card reader, a mobile electronic device and an adapter. The credit card reader transmits a wired network signal corresponding to a payment information. The mobile electronic device includes a wireless transmission unit. The wireless transmission unit is in communication with the wireless network to transmit a wireless network signal. The adapter is electrically connected between the credit card reader and the mobile electronic device. When the mobile point-of-sale module executes a domain-switching function of performing conversion between the wired network signal and the wireless network signal, the payment system performs an authentication and verification process on the payment information.

From the above descriptions, the present invention provides the hybrid mobile payment architecture and the mobile point-of-sale module. According to the technology of the present invention, the mobile payment function of the credit card is effectively provided. Consequently, the security and convenience in credit card transaction are enhanced. Moreover, since the hybrid mobile payment architecture is compatible with the existing wired network credit card service architecture, the cost of installing the wireless mobile payment equipment is reduced and the systematic maintenance and management becomes easier. In views of the product development, the mobile point-of-sale module is time-saving and cost-effective because the mobile point-of-sale module does not need to pass the security standard certification of the EMV organization.

The above objects and advantages of the present invention will become more readily apparent to those ordinarily skilled in the art after reviewing the following detailed description and accompanying drawings, in which:

### BRIEF DESCRIPTION OF THE DRAWINGS

FIG. 1 schematically illustrates the conventional credit card service architecture;
FIG. 2 schematically illustrates a hybrid mobile payment architecture according to an embodiment of the present invention; and
FIG. 3 is a schematic functional block diagram illustrating a mobile POS module according to an embodiment of the present invention.

### DETAILED DESCRIPTION OF THE PREFERRED EMBODIMENT

The present invention will now be described more specifically with reference to the following embodiments. It is to be noted that the following descriptions of preferred embodiments of this invention are presented herein for purpose of illustration and description only. In the following embodiments and drawings, the elements irrelevant to the concepts of the present invention are omitted and not shown.

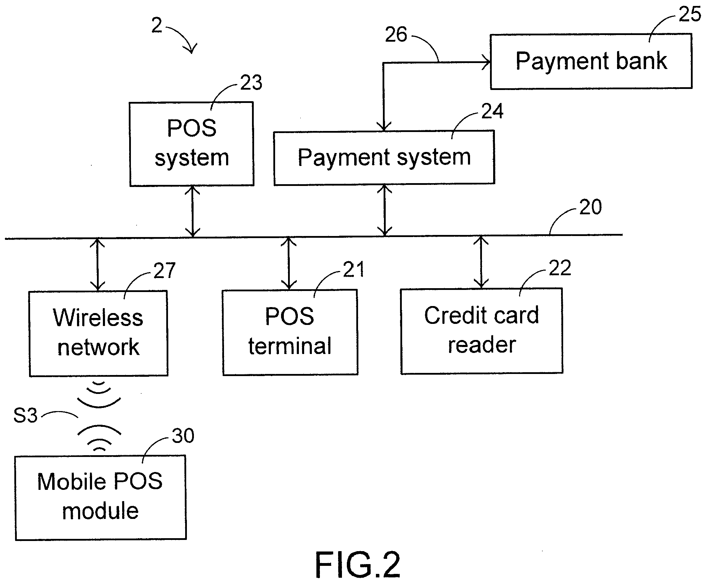

The present invention provides a hybrid mobile payment architecture and a mobile point-of-sale module. An embodiment of the present invention will be described as follows. FIG. 2 schematically illustrates a hybrid mobile payment architecture according to an embodiment of the present invention. As shown in FIG. 2, the hybrid mobile payment architecture 2 comprises a POS system 23, a payment system 24, a payment bank 25, a wired network 20, a wireless network 27, a POS terminal 21 and a mobile POS module 30. The POS system 23, the POS terminal 21, the payment system 24 and the payment bank 25 are the existing devices. The mobile POS module 30 is used for providing mobile payment service, especially the mobile credit card payment service.

Similarly, the wired network 20 is in communication with the POS system 23 and the payment system 24. The wireless network 27 is in communication with the wired network 20. The payment system 24 is further connected with the payment bank 25 in order to provide the processing flow of the credit card authorization and verification. In an embodiment, the wired network 20 is a local area network (LAN) or other network architecture that is constructed through a physical line. The wireless network 27 is provided by a wireless base station, a router or an access points. Consequently, the wireless communication area for 3G, 4G or Wi-Fi wireless communication is constructed.

On the other hand, the payment system 24 and the payment bank 25 are in communication with each other through another wired network 26. For example, the wired network 26 is the internet or any other network capable of providing data transmission. Consequently, the processing flow of the credit card authorization and verification is performed according to the settings of the payment system 24. That is, the payment system 24 performs the processing flow of the credit card authorization and verification according to the internet protocol (IP) address value of the terminal credit card machine of the appointed store that is preset by the back-end payment system 24.

In accordance with a feature of the present invention, the hybrid mobile payment architecture 2 still has the existing wired connection architecture. Moreover, the mobile POS module 30 still has the mobile credit card payment function. Consequently, the mobile payment function of the existing mPOS technology can be achieved. As mentioned above, the credit card reader of the existing mPOS technology must pass the security standard certification of the EMV organization. However, since the credit card reader used in the existing wired connection architecture of the hybrid mobile payment architecture 2 has been authenticated, the mobile POS module 30 does not need to pass the security standard certification of the EMV organization.

Moreover, the mobile POS module 30 of the present invention can provide a domain-switching function of converting and transmitting signals between the wired network and the wireless network. Consequently, the overall connection between the mobile POS module 30 and the wireless network 27 are considered as the specified credit card reader of the existing wired connection architecture by the payment system 24. Under this circumstance, payment system 24 still performs the processing flow of the credit card authorization and verification, and thus the mobile payment service is completed.

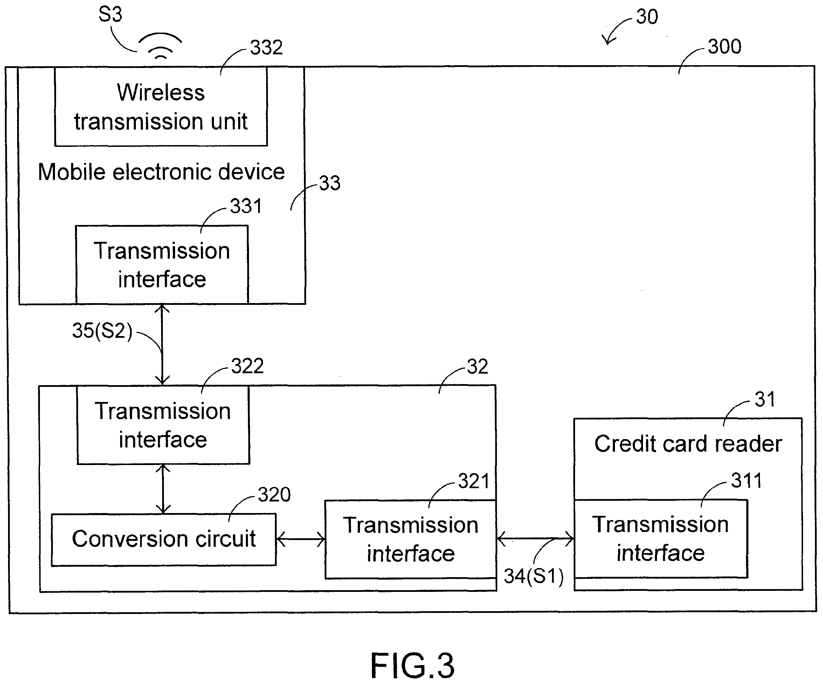

FIG. 3 is a schematic functional block diagram illustrating a mobile POS module according to an embodiment of the present invention. As shown in FIG. 3, the mobile POS module 30 comprises a credit card reader 31, a mobile electronic device 33 and an adapter 32. The credit card reader 31 is an authenticated terminal credit card machine. Depending on the requirement of the appointed store, the credit card reader 31 has the function of a magnetic stripe reader, a chip reader or a sensing reader. The mobile electronic device 33 is an existing mobile device such as a smart phone or a tablet computer. A corresponding application program for providing the mobile payment function has been previously installed in the mobile electronic device 33. The adapter 32 is a signal connection medium between the credit card reader 31 and the mobile electronic device 33. Moreover, the adapter 32 is electrically connected between the credit card reader 31 and the mobile electronic device 33.

In accordance with another feature of the present invention, the mobile POS module 30 further comprises an assembling case 300 in order for facilitating the service staff to perform the mobile payment service. The credit card reader 31, the mobile electronic device 33 and the adapter 32 are assembled in the assembling case 300. Consequently, the overall mobile POS module 30 can be carried and handheld. For example, due to the size, the general smart phone or tablet computer is suitably held with a single hand. Moreover, the size of the commercially available credit card machine is close to the size of this kind of mobile electronic device. In an embodiment, the credit card reader 31, the mobile electronic device 33 and the adapter 32 are covered by the assembling case 300, and the credit card reader 31 is disposed on a backside of the mobile electronic device 33.

As mentioned above, the credit card reader 31 and the mobile electronic device 33 are existing devices. In accordance with a further feature of the present invention, a connection technology is provided for converting and transmitting data between the credit card reader 31 and the mobile electronic device 33. In detail, the credit card reader 31 reads the credit card of the customer in a swiping manner or in any other appropriate reading manner. Moreover, a transmission interface 311 of the credit card reader 31 transmits a wired network signal S1 corresponding to a payment information. That is, the wired network signal S1 is a signal that is transmitted through a network cable. In an embodiment, the adapter 32 and the credit card reader 31 are electrically connected with each other through a first transmission line 34. The first transmission line 34 is an Ethernet cable line or an Ethernet network line with RJ-45 plugs.

The mobile electronic device 33 is a general smart phone or a general tablet computer. Consequently, the mobile electronic device 33 is equipped with a universal serial bus (USB) transmission interface for transmitting data and electricity. In an embodiment, the adapter 32 and the mobile electronic device 33 are electrically connected with each other through a second transmission line 35. The second transmission line 35 is a USB transmission line. The adapter 32 is an adapting device between the local area network (LAN) interface and the USB interface.

Moreover, the adapter 32 further comprises a conversion circuit 320. The conversion circuit 320 comprises a circuit board (not shown) and related electronic components (not shown). The conversion circuit 320 is used for converting an input signal into an output signal. The size and shape of the conversion circuit 320 may be designed according to the assembled structures of the credit card reader 31 and the mobile electronic device 33. Consequently, the volume of the assembling case 300 or the mobile POS module 30 is reduced to be as small as possible.

Since the credit card reader 31 and the corresponding first transmission line 34 are existing components for achieving the wired network connection, the adapter 32 has to be equipped with a transmission interface 321 corresponding to the first transmission line 34. For example, the adapter 32 is a hub. The plug of the first transmission line 34 is inserted into and electrically connected with the hub. Similarly, the mobile electronic device 33 and the corresponding second transmission line 35 are the existing components for transmitting data and electricity. Consequently, the adapter is also equipped with a transmission interface 322 corresponding to the second transmission line 35. For example, the transmission interface 322 is a USB transmission interface. The plug of the transmission interface 322 is inserted into and electrically connected with the adapter 32.

It is noted that the concepts of the present invention are not limited thereto. In another embodiment, the credit card reader 31 and the mobile electronic device 33 are existing devices and combined together through the adapter 32. Under this circumstance, an end of the transmission line of the credit card reader 31 and an end of the transmission line of the mobile electronic device 33 to be electrically connected with the adapter 32 are directly welded on the circuit board of the conversion circuit 320. That is, the user is not allowed to self-remove the two transmission lines from this mobile POS module. Consequently, the adapter 32 is not necessarily equipped with the corresponding hot-swappable transmission interfaces for manual insertion and extraction.

In another embodiment, these transmission interfaces are designed as plugs and sockets. For example, the transmission interface 322 is a USB plug, and the transmission interface 331 is a USB socket corresponding to the transmission interface 322. Under this circumstance, the transmission interface 322 and the transmission interface 331 are electrically connected with each other directly. Consequently, the transmission lines are omitted.

Please refer to FIGS. 2 and 3 again. In this embodiment, the mobile electronic device 33 further comprises a wireless transmission unit 332. The wireless transmission unit 332 is in wireless communication with the wireless network 27. Consequently, the wireless transmission unit 332 and the wireless network 27 can transmit data in a wireless transmission manner. As shown in FIG. 3, the wired network signal S1 is transmitted between the adapter 32 and the credit card reader 31. Moreover, a data packet S2 is transmitted between the adapter 32 and the mobile electronic device 33. Moreover, a wireless network signal S3 is transmitted between the mobile electronic device 33 and the wireless network 27.

When the mobile POS module 30 performs the domain-switching function to provide the mobile payment service, the following process is performed. For example, the adapter 32 performs conversion between the wired network signal S1 and the data packet S2, and the mobile electronic device 33 performs conversion between the data packet S2 and the wireless network signal S3. In detail, the conversion circuit 32 of the adapter 32 performs conversion between the wired network signal S1 and the data packet S2, and a domain-switching application program (APP.) installed in the mobile electronic device 33 is used to perform conversion between the data packet S2 and the wireless network signal S3.

The payment information contains the consumer's credit card number, the credit card security number, the amount of consumption, and so on. Moreover, the wired network signal S1 contains the IP address values of the transmission destination and the transmission source. Subsequently, the converted data packet S2 and the converted wireless network signal S3 contain the above information contents. Consequently, the wired network signal S1 from the terminal credit card machine is converted into the wireless network signal S3, and the wireless network signal S3 is transmitted to the payment system 24 through the wireless network 27 and the wired network 20 in order to be authenticated and verified by the payment system 24.

In some situations, the credit card payment needs signature verification. Consequently, the mobile POS module 30 further allows for electronic signature. That is, a mobile payment application program (App.) corresponding to the credit card reader 31 is installed in the mobile electronic device 33. When the mobile payment application program is executed, a writing window or a writing sheet is shown for the consumer to sign in a touch-writing manner. Moreover, when the mobile payment application program is executed, an operation interface is provided for the service staff to perform the mobile payment service or other service (e.g., the ordering service). The contents of this application program may be designed according to the requirement of the appointed store. Alternatively, the application program with a unified format is developed.

As shown in FIG. 2, the hybrid mobile payment architecture 2 further comprises an additional credit card reader 22. The additional credit card reader 22 is the component of the existing architecture. That is, the additional credit card reader 22 is in communication with the payment system 24 through the wired network 20. As mentioned above, the hybrid mobile payment architecture 2 still retains the existing credit card service architecture. Consequently, the existing architecture is in wired connection with more than one credit card machine (i.e., the additional credit card reader 22). In other words, the mobile payment function of the existing credit card service architecture is expanded according to the hybrid mobile payment architecture of the present invention.

For achieving the above purpose, the additional credit card reader 22 is connected to the hybrid mobile payment architecture 2 according to another IP address value. Since the credit card reader 31 and the additional credit card reader 22 are existing devices, they are connected to the payment system 24 in the wired transmission manner. If the credit card reader 31 of the mobile POS module 30 is set to connect with the payment system 24 according to a first IP address value, the additional credit card reader 22 is set to connect with the payment system 24 according to a second IP address value in a wired transmission manner. The second IP address value is different from the first IP address value.

Although the mobile POS module 30 can provide wireless connection to perform the mobile payment function, the credit card reader 31 still issues the wired network signal S1 in the wired transmission manner according to the set IP address value. In the domain-switching process, the converted data packet S2 and the converted wireless network signal S3 in the subsequent steps contain the IP address value of the credit card reader 31.

If the wireless network 27 is provided by a wireless base station, the mobile POS module 30 and the wireless base station are connected with each other according to the same IP address value. This IP address value corresponds to the wired network signal S1 and the wireless network signal S3. As a result, the connection between the mobile POS module 30 and the wireless network 27 (i.e., the wireless base station) in the overall architecture is considered as a connection device under the wired network 20. Since the mobile payment process of the credit card reader 31 is not sensed by the payment system 24, the payment system 24 performs the credit card authorization and verification according to the existing wired settings.

In the architecture and configuration of FIGS. 2 and 3, the directions of the signal transmission include the uploading direction and the downloading direction. That is, the payment system 24 may transmit back a message according to the IP address value of the credit card reader 31. Consequently, the back-end verification result can be shown on a display screen of the mobile electronic device 33 or the credit card 31. For example, the returned message from the payment system 24 is shown on the display of the mobile electronic device 33 when the mobile payment application program is executed. Consequently, the returned message indicates that the credit card payment of the consumer is allowed or not allowed.

It is noted that numerous modifications and alterations may be made while retaining the teachings of the invention. For example, as mentioned above, the transmission interfaces and the transmission lines may be selectively employed. In the above embodiment, the domain-switching process is performed when the domain-switching application program in the mobile electronic device 33 is executed. Consequently, the domain-switching process is implemented through execution of the software component of the application program. The adapter 32 performs the conversion between the local area network (LAN) format and the USB format through the hardware circuit. In some other embodiment, a portion of the domain-switching process performed by the domain-switching application program may be implemented by the conversion circuit 320. In addition, the related program code or firmware is loaded into the related electronic component (e.g., the storage unit) in order to be accessed. Under this circumstance, the converted result is directly issued in the wireless transmission manner by the mobile electronic device 33, and the domain-switching process is completed.

According to the practical requirement or other objects (e.g., the object of achieving better conversion efficiency), the domain-switching application program may be modified by the program developer while retaining the teaching of the present invention. In accordance with the basic concept, the wireless network signal converted from the wired network signal still contains the specified IP address value.

From the above descriptions, the present invention provides the hybrid mobile payment architecture and the mobile point-of-sale module. According to the technology of the present invention, the mobile payment function of the credit card is effectively provided. Consequently, the security and convenience in credit card transaction are enhanced. Moreover, since the hybrid mobile payment architecture is compatible with the existing wired network credit card service architecture, the cost of installing the wireless mobile payment equipment is reduced and the systematic maintenance and management becomes easier. In views of the product development, the mobile point-of-sale module is time-saving and cost-effective because the mobile point-of-sale module does not need to pass the security standard certification of the EMV organization. In other words, the technology of the present invention is industrially valuable.

Therefore, the present invention can effectively solve the drawbacks of the conventional technology while achieving the purposes of the present invention.

While the invention has been described in terms of what is presently considered to be the most practical and preferred embodiments, it is to be understood that the invention needs not be limited to the disclosed embodiments. On the contrary, it is intended to cover various modifications and similar arrangements included within the spirit and scope of the appended claims which are to be accorded with the broadest interpretation so as to encompass all such modifications and similar structures.

## Claims

1. A hybrid mobile payment architecture (2), **characterized by** comprising:
a wired network (20) in communication with a point-of-sale system (23) and a payment system (24);
a wireless network (27) in communication with the wired network (20); and
a mobile point-of-sale module (30) comprising:
a credit card reader (31) transmitting a wired network signal (S1) corresponding to a payment information;
a mobile electronic device (33) comprising a wireless transmission unit (332), wherein the wireless transmission unit (332) is in communication with the wireless network (27) to transmit a wireless network signal (S3); and
an adapter (32) electrically connected between the credit card reader (31) and the mobile electronic device (33),
wherein when the mobile point-of-sale module (30) executes a domain-switching function of performing conversion between the wired network signal (S1) and the wireless network signal (S3), the payment system (24) performs an authentication and verification process on the payment information.

2. The hybrid mobile payment architecture (2) according to claim 1, **characterized in that** the mobile point-of-sale module (30) further comprises an assembling case (300), and the credit card reader (32), the mobile electronic device (33) and the adapter (32) are assembled in the assembling case (300).

3. The hybrid mobile payment architecture (2) according to claim 1, **characterized in that** when the domain-switching function is performed, the adapter (32) performs conversion between the wired network signal (S1) and a data packet (S2) and the mobile electronic device (33) performs conversion between the data packet (S2) and the wireless network signal (S3), wherein the data packet (S2) is transmitted between the adapter (32) and the mobile electronic device (33), and the wired network signal (S1) is transmitted between the adapter (32) and the credit card reader (31).

4. The hybrid mobile payment architecture (2) according to claim 3, **characterized in that** a conversion circuit (320) of the adapter (32) performs conversion between the wired network signal (S1) and the data packet (S2), and a domain-switching application program installed in the mobile electronic device (33) is executed to perform conversion between the data packet (S2) and the wireless network signal (S3).

5. The hybrid mobile payment architecture (2) according to claim 1, **characterized in that** the credit card reader (31) has a function of a magnetic stripe reader, a chip reader or a sensing reader.

6. The hybrid mobile payment architecture (2) according to claim 1, **characterized in that** the wired network (20) is a local area network, and the wireless network (27) is provided by a wireless base station, wherein the wireless base station is connected with the local area network in a wired transmission manner.

7. The hybrid mobile payment architecture (2) according to claim 6, **characterized in that** the mobile point-of-sale module (30) and the wireless base station are connected with each other according to the same internet protocol address value, and the internet protocol address value corresponds to the wired network signal (S1) and the wireless network signal (S3).

8. The hybrid mobile payment architecture (2) according to claim 1, **characterized in that** the hybrid mobile payment architecture (2) further comprises a point-of-sale terminal (21) and an additional credit card reader (22), wherein the point-of-sale terminal (21) is in communication with the point-of-sale system (23) through the wired network signal (S1), the additional credit card reader (22) is in communication with the payment system (24) through the wired network signal (S1), and the additional credit card reader (22) is connected to the payment system (24) according to another internet protocol address value.

9. The hybrid mobile payment architecture (2) according to claim 1, **characterized in that** the adapter (32) and the credit card reader (31) are electrically connected with each other through a first transmission line (34), and the first transmission line (34) is an Ethernet cable line or an Ethernet network line with RJ-45 plugs.

10. The hybrid mobile payment architecture (2) according to claim 1, **characterized in that** the adapter (32) and the mobile electronic device (33) are electrically connected with each other through a second transmission line (35), and the second transmission line (35) is a USB transmission line.

11. The hybrid mobile payment architecture (2) according to claim 1, **characterized in that** a mobile payment application program corresponding to the credit card reader (31) is installed in the mobile electronic device (33), wherein when the mobile payment application program is executed, a mobile payment service is operated.

12. A mobile point-of-sale module (30) for a wired network (20) and a wireless network (27), the wired network (20) being in in communication with a point-of-sale system (23) and a payment system (24), the wireless network (27) being in communication with the wired network (20), **characterized in that** the mobile point-of-sale module (30) comprises:
a credit card reader (31) transmitting a wired network signal (S1) corresponding to a payment information;
a mobile electronic device (33) comprising a wireless transmission unit (332), wherein the wireless transmission unit (332) is in communication with the wireless network (27) to transmit a wireless network signal (S3); and
an adapter (32) electrically connected between the credit card reader (31) and the mobile electronic device (33),
wherein when the mobile point-of-sale module (30) executes a domain-switching function of performing conversion between the wired network signal (S1) and the wireless network signal (S3), the payment system (24) performs an authentication and verification process on the payment information.
